# EUROPEAN PATENT SPECIFICATION

(11) **EP 2 218 757 B1**
(45) Date of publication and mention of the grant of the patent: **06.09.2017**
(21) Application number: 10153022.8
(22) Date of filing: 09.02.2010
(51) Int. Cl.: C09D 11/00

(54) **Ink composition**
Tintenzusammensetzung
Composition d'encre

(30) Priority: 12.02.2009 JP 2009029609; 04.02.2010 JP 2010023346
(43) Date of publication of application: 18.08.2010
(73) Proprietor: Fujifilm Corporation, Minato-ku Tokyo (JP)
(72) Inventor: Shibata, Naoya, Kanagawa (JP)
(74) Representative: Hoffmann Eitle

(56) References cited:
- EP-A1- 2 003 176
- EP-A2- 2 058 375
- EP-A2- 2 090 625
- EP-A2- 2 107 090
- WO-A2-2007/006638
- JP-A- 1 210 467

## Description

### BACKGROUND OF THE INVENTION

### Field of the Invention

The invention relates to an ink composition.

### Description of the Related Art

Various recording media for inkjet recording have been studied, and techniques for forming high-quality images are in demand. Further, for inks for inkjet recording, coloring materials such as pigments have been studied as ink materials having resistance against water and/or light.

In particular, it is desired to conduct high-quality printing at a high speed on plain paper which is inexpensive and easily available (for example, PPC (Plain Paper Copier) paper, or non-coated paper for printing).

However, pigment-based inks have a disadvantage of a low printing density because it is hard for the pigment to remain on a surface of copying paper. Further, the pigment-based inks are disadvantageous because, when an amount of the pigment in the ink is increased to improve the printing density, this causes an increase in ink viscosity, resulting in deterioration in ink ejection property.

Concerning ejection stability of the pigment-based ink, coating a pigment with a vinyl polymer obtained by polymerizing a methacrylic acid ester monomer has been proposed (see, for example, Japanese Patent Application Laid-Open (JP-A) No. 2004-2662).

Meanwhile, production of a pigment-based ink usually includes a step of producing a dispersion having a high pigment concentration, and a step of adding and mixing various additives, such as a water-soluble organic solvent and the like, to the dispersion to prepare an ink.

Ejection stability over time of ink prepared using an aged pigment dispersion is important in view of quality of a recorded image.

WO-A-2007/006638 discloses a pigment dispersion comprising a color pigment represented by Formula (AI) below wherein, R1 to R8 are independently selected from the group consisting of hydrogen, an alkyl group and a halogen; and a polymeric dispersant having via a linking group covalently linked to its polymeric backbone at least one pending chromophore group wherein the at least one pending chromophore group is a chromophore group occurring as a side group on the polymeric backbone and not a group in the polymeric backbone itself, and the at least one pending chromophore group is represented by the Formula (AII) below wherein, L is a linking group forming a covalent bond with the polymeric backbone and R1 to R8 are independently selected from the group consisting of hydrogen, an alkyl group and a halogen.

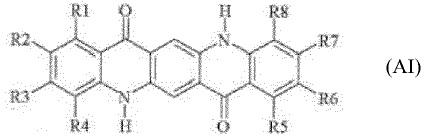

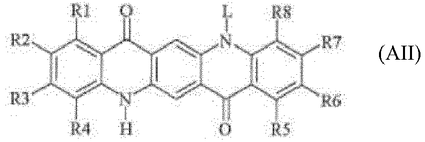

JP-A-01210467 discloses a pigment composition comprising a pigment and a dispersant which is an addition polymer comprising an α,β-ethylenically addition-polymerizable monomer containing a group consisting of at least two bonded benzene rings, a group of an 8 C or higher aromatic ring or a heterocyclic group in the molecule with another α,β-ethylenically addition-polymerizable monomer miscible and copolymerizable therewith.

EP-A-2003176 discloses an ink composition which includes: first particles (A) which are insoluble and dispersed in an aqueous dispersion medium, a polarity of the first particles (A) being one of positive and negative; and second particles (B) which are insoluble and dispersed in the aqueous dispersion medium, the second particles (B) including both a cationic group and an anionic group, the second particles (B) having a zeta potential that changes along with a change in pH of the aqueous dispersion medium.

### SUMMARY OF THE INVENTION

The invention provides an ink composition which may be used to form a recorded image in which the generation of white spots and image irregularity is suppressed. The composition may be used to form high definition images.

According to the present invention, there is provided an ink composition comprising:
a pigment (P);
a water-soluble organic solvent; and
water,
at least a part of a surface of the pigment being coated with a copolymer (D) comprising a repeating unit (a) represented by the following Formula (1) and a repeating unit (b) having an ionic group, and
the mass ratio (D:P) of the copolymer (D) to the pigment (P) lies in the range 10-40:100: 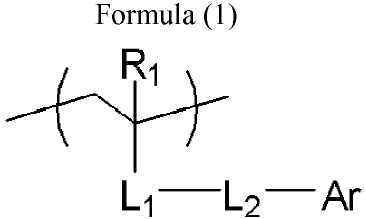 wherein R₁ represents a hydrogen atom or a methyl group; L₁ represents a substituted or unsubstituted phenylene group; L₂ represents a single bond or a divalent linkage group; and Ar represents a monovalent group derived from acridone or phthalimide.

### DETAILED DESCRIPTION

The inventor found that even in the pigment-based ink described in JP-A No. 2004-2662, it is hard to realize formation of a recorded image in which generation of white spots and image irregularity is suppressed after aging the ink and after aging the dispersion. The present invention has been made in view of the above circumstances.

The inventor studied hard and found that forming a high-definition image in which generation of white spots and image irregularity is suppressed, may be achieved by the following items of <1> to <17>, each of which is a specific ink composition including a copolymer having a specific structure, and having a specific mass ratio of the copolymer to pigment.
<1> An ink composition comprising:
   a pigment (P);
   a water-soluble organic solvent; and
   water,
   at least a part of a surface of the pigment being coated with a copolymer (D) comprising a repeating unit (a) represented by the following Formula (1) and a repeating unit (b) having an ionic group, and
   the mass ratio (D:P) of the copolymer (D) to the pigment (P) lies in the range 10-40:100: 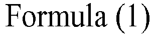 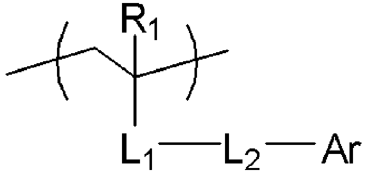 wherein R₁ represents a hydrogen atom or a methyl group; L₁ represents a substituted or unsubstituted phenylene group; L₂ represents a single bond or a divalent linkage group; and Ar represents a monovalent group derived from acridone or phthalimide.
<2> The ink composition of the item <1>, wherein, in Formula (1), L₂ represents a single bond or a divalent linkage group having 1 to 30 carbon atoms.
<3> The ink composition of the item <1>, wherein, in Formula (1), L₂ represents an alkyleneoxy group having 1 to 25 carbon atoms, an imino group (-NH-), a sulfamoyl group, or a divalent linkage group containing an alkylene group having 1 to 20 carbon atoms or an ethylene oxide group [-(CH₂CH₂O)ₙ-, n = 1 to 6], or a combination of two or more of these groups.
<5> The ink composition of any one of the items <1> to <3>, wherein the repeating unit (b) having an ionic group is a repeating unit derived from a monomer containing an ionic group selected from the group consisting of a carboxy group, a sulfo group, a phosphonate group and a hydroxy group.
<6> The ink composition of any one of the items <1> to <5>, wherein the copolymer (D) further includes a hydrophilic structural unit containing a hydrophilic functional group other than the group contained in the repeating unit (b) having an ionic group.
<7> The ink composition of the item <6>, wherein the hydrophilic structural unit containing a hydrophilic functional group other than the group contained in the repeating unit (b) having an ionic group is a hydrophilic structural unit derived from a (meth)acrylate, a (meth)acrylamide, or a vinyl ester, which have a nonionic hydrophilic group.
<8> The ink composition of the item <6> or the item <7>, wherein the hydrophilic functional group is a hydroxy group, an amino group, an amido group in which a nitrogen atom is not substituted, or an alkylene oxide group.
<9> The ink composition of any one of the items <1> to <8>, wherein the copolymer (D) further includes a hydrophobic structural unit other than the repeating unit (a) represented by Formula (1).
<10> The ink composition of the item <9>, wherein the hydrophobic structural unit other than the repeating unit (a) represented by Formula (1) is a hydrophobic structural unit derived from a vinyl monomer selected from the group consisting of a (meth)acrylate, a (meth)acrylamide, a styrene and a vinyl ester which do not belong to the hydrophilic structural unit, or a hydrophobic structural unit containing an aromatic ring linked to an atom in the main chain via a linkage group.
<11> The ink composition of the item <10>, wherein the hydrophobic structural unit containing an aromatic ring linked to an atom in the main chain via a linkage group is a structural unit represented by the following Formula (2) excluding the repeating unit represented by Formula (1): 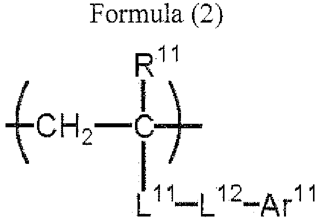 wherein, in Formula (2), R¹¹ represents a hydrogen atom, a methyl group, or a halogen atom; L¹¹ represents *-COO-, *-OCO-, *-CONR¹²-, or *-O-; R¹² represents a hydrogen atom or an alkyl group having 1 to 10 carbon atoms; an asterisk (*) in the group represented by L¹¹ denotes a position of a bond connected to the main chain; L¹² represents a single bond or a divalent linkage group having 1 to 30 carbon atoms; and Ar¹¹ represents a monovalent group derived from an aromatic ring.
<12> The ink composition of the item <11>, wherein, in Formula (2), L¹² represents an alkyleneoxy group having 1 to 25 carbon atoms, an imino group (-NH-), a sulfamoyl group, a divalent linkage group containing an alkylene group having 1 to 20 carbon atoms or an ethylene oxide group [-(CH₂CH₂O)ₙ-, n = 1 to 6], or a combination of two or more of these groups.
<13> The ink composition of the item <11> or the item <12>, wherein, in Formula (2), Ar¹¹ is a monovalent group derived from any one selected from the group consisting of a benzene ring, a condensed aromatic ring having eight or more carbon atoms, a hetero ring condensed with (an) aromatic ring(s), and two or more benzene rings linked to each other.
<14> The ink composition of any one of the items <1> to <13>, wherein the mass ratio (D:P) of the copolymer (D) to the pigment (P) is in a range of from 25:100 to 40:100.
<15> The ink composition of any one of the items <1> to <14>, wherein the copolymer (D) includes a hydrophilic structural unit (A) and a hydrophobic structural unit (B), the hydrophobic structural unit (B) contains the repeating unit (a) represented by Formula (1), the hydrophilic structural unit (A) contains the repeating unit (b) having an ionic group, the content of the hydrophilic structural unit (A) is 15% by mass or less of the total mass of the copolymer (D), and the repeating unit (b) having an ionic group contains a structural unit derived from (meth)acrylic acid.
<16> The ink composition of any one of the items <1> to <15>, wherein the copolymer (D) has an acid value of 30 mgKOH/g to 100 mgKOH/g.
<17> The ink composition of any one of the items <1> to <16>, wherein the copolymer (D) has a weight average molecular weight of 30,000 or more.

### <Ink composition>

The ink composition of the invention, that may be simply referred to as "ink" hereinafter, contains: a pigment; a water-soluble organic solvent; and water. The pigment has a configuration in which at least a part of a surface of a pigment (P) is coated with a copolymer (D) containing a repeating unit (a) represented by Formula (1) and a repeating unit (b) having an ionic group. A mass ratio (D:P) of the copolymer (D) to the pigment (P) is in a range of from 10:100 to 40:100. The ink composition of the invention may further contain other components such as a resin particle, a polymer latex or a surfactant, if necessary.

This configuration may facilitate to provide an ink composition of the invention that is capable of inhibiting generation of white spots and image irregularity in a recorded image to provide an image with high definition.

In the invention, the pigment coated with the copolymer (D) that contains the repeating unit (a) represented by Formula (1) and the repeating unit (b) having an ionic group may exist stably in the ink liquid as a coloring agent, when the mass ratio (D:P) of the copolymer (D) to the pigment (P) is in a range of from 10:100 to 40:100. When the ink composition has a configuration described above, dispersion stability of the pigment in the ink may be dramatically improved, and generation of white spots in a recorded image may be inhibited by performing record on a recording medium using the ink.

That is, image defects such as white spots caused by irregular ink jetting direction during ink ejection is inhibited from occurring, whereby a high definition image free from white spots may be realized.

### (Pigment coated with Copolymer)

The ink composition of the invention contains at least a pigment. The pigment, which may be referred to as a "resin-coated pigment" hereinafter, has a configuration in which a pigment (P) is coated with a copolymer (D) (which may be referred as copolymer simply in some case) which contains at least the repeating unit (a) represented by Formula (1) and the repeating unit (b) having an ionic group. The mass ratio (D:P) of the copolymer (D) to the pigment (P), that herein means a ratio of "an amount of the copolymer (D) in the resin-coated pigment" to "an amount of the pigment (P) in the resin-coated pigment" in terms of mass, is in a range of from 10:100 to 40:100.

In the pigment coated with the copolymer, dispersion stability may be deteriorated when the mass ratio (D:P) of the copolymer (D) to the pigment (P) is less than 10:100, or more than 40:100.

The surface of the resin-coated pigment in the invention may be wholly or partially coated with the copolymer according to occasions.

The mass ratio (D:P) of the copolymer (D) to the pigment (P) in the invention is preferably in a range of from 15:100 to 40:100, more preferably in a range of from 25:100 to 40:100, even more preferably in a range of from 25:100 to 38:100, and particularly preferably in a range of from 25:100 to 35:100, from the viewpoints of dispersibility of the pigment and inhibiting generation of white spot in a recorded image.

### <Repeating unit (a) represented by Formula (1)>

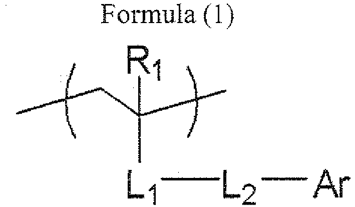

In Formula (1), R₁ represents a hydrogen atom or a methyl group; L₁ represents a substituted or unsubstituted phenylene group; L₂ represents a single bond or a divalent linkage group; and Ar represents a monovalent group derived from: a condensed aromatic ring having 8 or more carbon atoms; a hetero ring condensed with (an) aromatic ring(s); or two or more benzene rings linked to each other.

The "group derived from one composition (, one monomer, or one structure)" herein means a group that has a structure which can be formed by removing at least one atom from the composition (, the monomer, or the structure).

In Formula (1), R₁ represents a hydrogen atom or a methyl group, and preferably represents a methyl group.

L₁ represents a substituted or unsubstituted phenylene group. In preferable embodiments, L₁ is an unsubstituted phenylene group.

L₂ represents a single bond or a divalent linkage group. The divalent linkage group is preferably a linkage group having I to 30 carbon atoms, more preferably a linkage group having 1 to 25 carbon atoms, still more preferably a linkage group having 1 to 20 carbon atoms, and particularly preferably a linkage group having 1 to 15 carbon atoms.

In most preferable embodiments, L₂ represents an alkyleneoxy group having 1 to 25 (more preferably 1 to 10) carbon atoms, an imino group (-NH-), a sulfamoyl group, a divalent linkage group containing an alkylene group such as an alkylene group having 1 to 20 (more preferably 1 to 15) carbon atoms or an ethylene oxide group [-(CH₂CH₂O)ₙ-, n = 1 to 6], or a combination of at least two kinds of them.

Ar represents a monovalent group derived from acridone or phthalimide from the viewpoint of stability of the coated pigment.

Specific examples of the monomer that forms the repeating unit (a) represented by Formula (1) include the following monomers, although the invention is not limited to these examples. 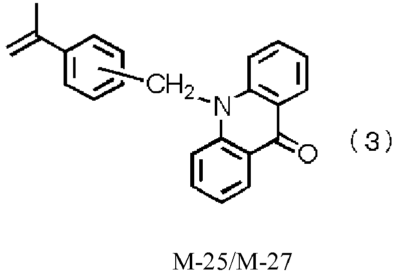 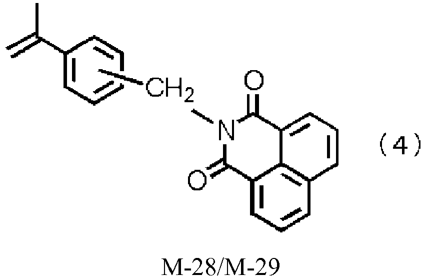 Not in accordance with the present invention
M-25/M-27 represents a mixture of monomers M-25 and M-27, each of which having the substituent at m- or p- position.
M-28/M-29 (for reference only) represents a mixture of monomers M-28 and M-29, each of which having the substituent at m- or p- position.

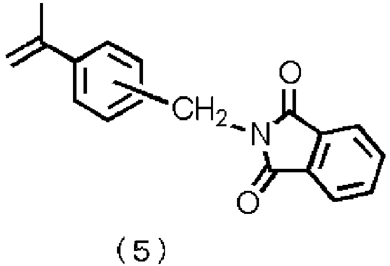

In Formula (1), a combination of groups wherein R₁ is a methyl group, L₁ is an unsubstituted phenylene group, L₂ is a single bond or a divalent linkage group, and Ar is a monovalent group derived from acridone or phthalimide is preferable.

The content of the repeating unit (a) represented by Formula (1) is preferably from 5% by mass to 25% by mass, and more preferably from 10% by mass to 18% by mass, with respect to the total mass of the copolymer.

When the content is 5% by mass or more, occurrence of image defects such as white spots may be remarkably suppressed. When the content is 25% by mass or less, suitability to production of the copolymer may tend to be kept away from problems due to decrease of solubility of components in a polymerization reaction liquid such as methyl ethyl ketone.

### <Repeating unit (b) having Ionic group>

Examples of the repeating unit (b) having an ionic group include repeating units derived from a monomer having an ionic group such as a carboxy group, a sulfo group, a phosphonate group or a hydroxy group. Specific examples thereof include vinyl monomers having an ionic functional group such as (meth)acrylates, (meth)acrylamides, and vinyl esters, each of which having an ionic functional group.

Among these, a repeating unit derived from acrylic acid or methacrylic acid is preferable. That is, the copolymer preferably contains either one or both of a structural unit derived from acrylic acid and a structural unit derived from methacrylic acid.

The "repeating unit (or a structural unit) (of a polymer) derived from a (specific) monomer" herein means a unit that has a structure which can be typically incorporated into the polymer by employing the (specific) monomer as that to be polymerized for forming the polymer.

The repeating unit having an ionic group may be incorporated into the copolymer by forming a polymer chain of the copolymer by polymerizing monomers corresponding to the repeating unit. Alternatively, the repeating unit having an ionic group may be provided in the copolymer by introducing an ionic functional group into a polymer chain of the copolymer which has been formed by polymerization.

The content of the ionic group-containing repeating unit may vary depending on, for example, the ratio of the repeating unit (a) represented by Formula (1).

For example, when the copolymer is constituted only by the repeating unit (b) having an ionic group (hydrophilic structural unit (A)) and the repeating unit (a) represented by Formula (1) (hydrophobic structural unit (B)), the content of the repeating unit (b) having an ionic group is obtained according to: [100-{repeating unit (a) represented by Formula (1)} (%)] in terms of percent by mass.

The repeating unit (b) having an ionic group may be used singly or in a combination of two or more of them.

In preferable embodiments, the copolymer employed in the invention may contain the repeating unit (b) having an ionic group at a ratio of 15% by mass or less with respect to the total mass of the copolymer, and the repeating unit (b) having an ionic group may contain at least a structural unit derived from (meth)acrylic acid.

When the content of the repeating unit (b) having an ionic group is 15% by mass or less with respect to the total mass of the copolymer, the dispersion stability may tend to be more excellent.

The content of the repeating unit (b) having an ionic group may be preferably in the range of from 5% by mass to 15% by mass, and more preferably in the range of from 7% by mass to 13% by mass, with respect to a total mass of the copolymer from the viewpoint of dispersion stability of the copolymer.

The copolymer employed in the invention is preferably a resin including a hydrophilic structural unit (A) and a hydrophobic structural unit (B) from the viewpoint of having the copolymer stably exist in an ink, reducing adhersion or deposition of aggregates and readily removing adhered aggregates. Herein, the hydrophobic structural unit (B) includes the repeating unit (a) represented by Formula (1).

### <Hydrophilic structural unit (A)>

The copolymer that contains at least one kind of the repeating unit (b) having an ionic group may further have a hydrophilic structural unit having a hydrophilic functional group other than the group contained in the repeating unit (b) having an ionic group as long as the effect of the invention is not impaired.

Examples of the other hydrophilic structural unit include a structural unit derived from a monomer having a nonionic hydrophilic group. Specific examples thereof include vinyl monomers having a hydrophilic functional group such as (meth)acrylates having a hydrophilic functional group, (meth)acrylamides having a hydrophilic functional group, or vinyl esters having a hydrophilic functional group.

Examples of the "hydrophilic functional group" include a hydroxy group, an amino group, an amido group (in which a nitrogen atom is not substituted), and the alkylene oxides such as polyethylene oxide and polypropylene oxide described below.

The monomer that forms the hydrophilic structural unit containing a nonionic hydrophilic group is not particularly limited as long as it contains a functional group for forming a polymer, such as an ethylenically unsaturated bond, and a nonionic hydrophilic functional group. The monomer may be selected from known monomers. Specific examples of preferable monomers may include hydroxyethyl (meth)acrylate, hydroxybutyl (meth)acrylate, (meth)acrylamide, aminoethyl acrylate, aminopropyl acrylate, and (meth)acrylates containing an alkylene oxide polymer.

The hydrophilic structural unit (A) having a nonionic hydrophilic group may be incorporated into the copolymer by forming a polymer chain of the copolymer by polymerizing monomers corresponding to the hydrophilic structural unit. Alternatively, the hydrophilic structural unit having a nonionic hydrophilic group may be provided in the copolymer by introducing a hydrophilic functional group into a polymer chain of the copolymer which has been formed by polymerization.

The hydrophilic structural unit having a nonionic (hydrophilic group is more preferably a hydrophilic structural unit having an alkylene oxide structure. From the viewpoint of hydrophilicity, the alkylene moiety of the alkylene oxide structure preferably has 1 to 6 carbon atoms, more preferably has 2 to 6 carbon atoms, and still more preferably has 2 to 4 carbon atoms. The degree of polymerization of the alkylene oxide structure is preferably 1 to 120, more preferably 1 to 60, and still more preferably 1 to 30.

In one preferable embodiment, the hydrophilic structural unit having a nonionic hydrophilic group is a hydroxy group-containing hydrophilic functional unit. The number of a hydroxy group in the structural unit, although being not particularly limited, is preferably 1 to 4, more preferably 1 to 3, and still more preferably 1 or 2, from the viewpoint of the hydrophilicity of the copolymer and compatibility with a solvent and other monomers at the time of polymerization.

The content ratio of the hydrophilic structural unit may vary depending on, for example, the content ratio of the hydrophobic structural unit (B). For example, when the copolymer is composed exclusively of acrylic acid and/or methacrylic acid (hydrophilic structural unit (A)) and the hydrophobic structural unit (B) described below, the content ratio of acrylic acid and/or methacrylic acid may be determined by "100 - (the hydrophobic structural unit) (% by mass)".

The hydrophilic structural unit (A) may be used singly or as a mixture of two or more of them.

### <Hydrophobic structural unit (B)>

In addition to the repeating unit (a) represented by Formula (1), the hydrophobic structural unit (B) in the copolymer employed in the invention may further contain a hydrophobic structural unit other than the repeating unit (a) represented by Formula (1) as long as the effect of the invention is not impaired.

Examples of the hydrophobic structural unit other than the repeating unit (a) represented by Formula (1) include structural units derived from vinyl monomers such as (meth)acrylates, (meth)acrylamides, styrenes, and vinyl esters, which do not belong to the hydrophilic structural unit (for example, those containing no hydrophilic functional group), and a hydrophobic structural unit containing an aromatic ring linked to an atom in the main chain via a linkage group. These structural units may be used alone or in a combination of two or more of them.

Examples of the (meth)acrylates include methyl (meth)acrylate, ethyl (meth)acrylate, butyl (meth)acrylate, isobutyl (meth)acrylate, and hexyl (meth)acrylate. Among them, methyl (meth)acrylate, ethyl (meth)acrylate, and butyl (meth)acrylate are preferable, and methyl (meth)acrylate and ethyl (meth)acrylate are particularly preferable.

Examples of the (meth)acrylamides include N-cyclohexyl(meth)acrylamide, N-(2-methoxyethyl)(meth)acrylamide, N,N-diallyl(meth)acrylamide, and N-allyl(meth)acrylamide.

Examples of the styrenes include styrene, methylstyrene, dimethylstyrene, trimethylstyrene, ethylstyrene, isopropylstyrene, n-butylstyrene, tert-butylstyrene, methoxystyrene, butoxystyrene, acetoxystyrene, chlorostyrene, dichlorostyrene, bromostyrene, chloromethylstyrene, hydroxystyrene protected by a group removable with an acidic substance (for example, t-Boc), methyl vinyl benzoate, α-methylstyrene, and vinylnaphthalene. Among them, styrene and α-methylstyrene are preferable.

Examples of the vinyl esters include vinyl acetate, vinyl chloroacetate, vinyl propionate, vinyl butyrate, vinyl methoxy acetate, and vinyl benzoate. Among them, vinyl acetate is preferable.

The "hydrophobic structural unit containing an aromatic ring linked to an atom in the main chain via a linkage group" is preferably a structural unit wherein the proportion of the aromatic ring linked to an atom in the main chain of the copolymer via a linkage group is from 15% by mass to 27% by mass, more preferably from 15% by mass to 25% by mass, and even more preferably from 15% by mass to 20% by mass with respect to the copolymer.

The aromatic ring is linked to the atom in the main chain of the copolymer not directly but via a linkage group. Therefore, an adequate distance is kept between the hydrophobic aromatic ring and the hydrophilic structural unit, so that the copolymer readily interacts with the pigment (P) and is firmly adsorbed thereon, thus improving the dispersibility of the pigment.

The "hydrophobic structural unit containing an aromatic ring linked to an atom in the main chain via a linkage group" is preferably a structural unit represented by the following Formula (2) (excluding the repeating unit (a) represented by Formula (1)):

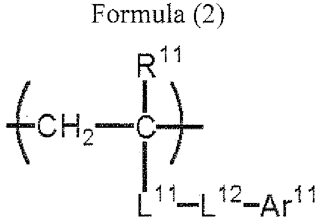

In Formula (2), R¹¹ represents a hydrogen atom, a methyl group, or a halogen atom. L¹¹ represents *-COO-, *-OCO-, *-CONR¹²-, or *-O-, and R¹² represents a hydrogen atom or an alkyl group having 1 to 10 carbon atoms. In the group represented by L¹¹, an asterisk (*) denotes a position of a bond connected to the main chain.

L¹² represents a single bond or a divalent linkage group having 1 to 30 carbon atoms. When L¹² is a divalent linkage group, it is preferably a linkage group having I to 25 carbon atoms, more preferably a linkage group having 1 to 20 carbon atoms, and more preferably a linkage group having 1 to 15 carbon atoms.

Among them, particularly preferable examples include an alkyleneoxy group having 1 to 25 carbon atoms (more preferably 1 to 10 carbon atoms), an imino group (-NH-), a sulfamoyl group, and divalent linkage groups containing an alkylene group, such as an alkylene group having 1 to 20 carbon atoms (more preferably 1 to 15 carbon atoms) or an ethylene oxide group [-(CH₂CH₂O)ₙ-, n = I to 6], and combinations of two or more of these groups.

In Formula (2), Ar¹¹ represents a monovalent group derived from an aromatic ring.

The aromatic ring which derives the monovalent group represented by Ar¹¹ is not particularly limited, and examples thereof include a benzene ring, a condensed aromatic ring having eight or more carbon atoms, a hetero ring condensed with (an) aromatic ring(s), and two or more benzene rings linked to each other. The details about the condensed aromatic ring having eight or more carbon atoms and the hetero ring condensed with (an) aromatic ring(s) are the same as those described above.

Specific examples of the monomer capable of forming the hydrophobic structural unit other than the repeating unit (a) represented by Formula (1) are shown below. However, the invention is not limited to the following specific examples.

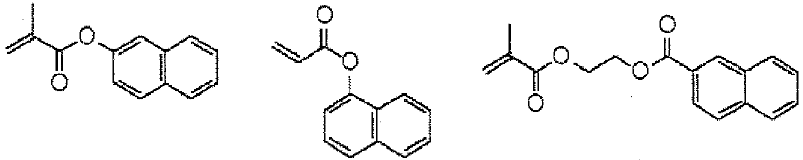

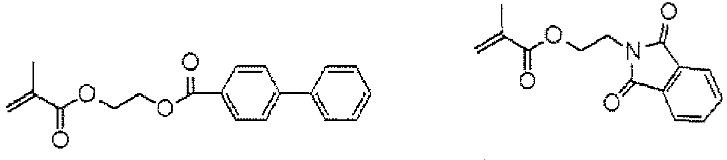

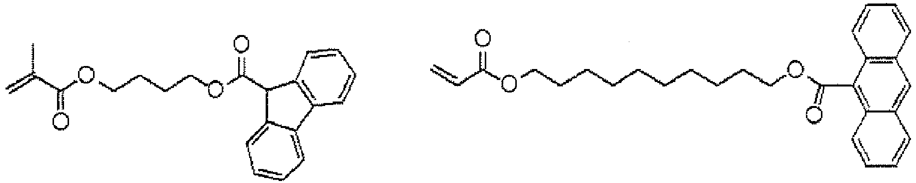

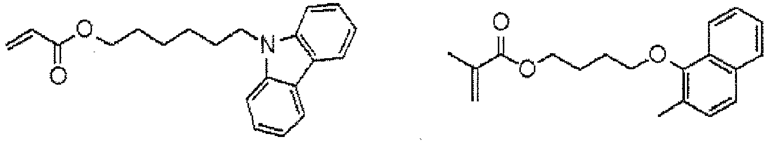

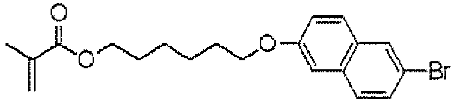

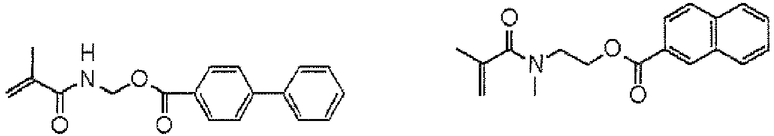

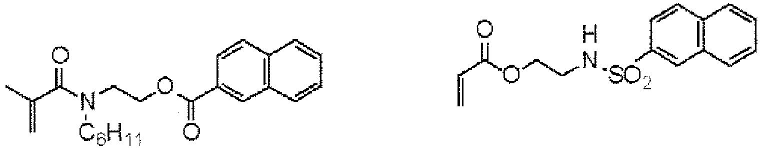

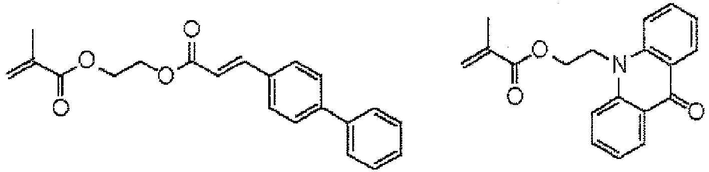

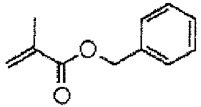

In the copolymer employed in the invention, the ratio of the hydrophilic structural unit (A) including the repeating unit (b) having an ionic group to the hydrophobic structural unit (B) (including the repeating unit (a) represented by Formula (1)) may depend on the degrees of the hydrophilicity and hydrophobicity of these components. Typically, the content of the hydrophilic structural unit (A) in the copolymer is preferably 15% by mass or less. The content of the hydrophobic structural unit (B) is preferably more than 80% by mass, and more preferably 85% by mass or more with respect to the total mass of the copolymer.

When the content of the hydrophilic structural unit (A) is 15% by mass or less, the amount of the component which singly dissolves in an aqueous medium may be decreased, which results in the improvement in pigment properties such as dispersibility, whereby good ink ejection properties may be achieved during inkjet recording.

The content ratio of the hydrophilic structural unit (A) is preferably more than 0% by mass but 15% by mass or less, more preferably from 2% by mass to 15% by mass, even more preferably from 5% by mass to 15% by mass, and particularly preferably from 8% by mass to 12% by mass with respect to the total mass of the copolymer.

In the invention, the acid value of the copolymer is preferably in the range of from 30 mgKOH/g to 100 mgKOH/g, more preferably in the range of from 30 mgKOH/g to 85 mgKOH/g, and particularly preferably in the range of from 50 mgKOH/g to 85 mgKOH/g from the viewpoints of pigment dispersibility and storage stability.

Specifically, when the acid value of the copolymer is 30 mgKOH/g or more, storage stability may tend to be improved. When the acid value of the copolymer is 100 mgKOH/g or less, pigment dispersibility may tend to be improved, which is preferable.

The acid value is defined as the mass (mg) of KOH necessary for completely neutralizing 1 g of the copolymer, and measured by the method described in Japanese Industrial Standard (JIS K0070, 1992), the disclosure of which is incorporated by reference herein.

The weight average molecular weight (Mw) of the copolymer employed in the invention is preferably 30,000 or more , more preferably from 30,000 to 150,000, even more preferably from 30,000 to 100,000, particularly preferably from 30,000 to 80,000, and most preferably from 30,000 to 60,000. When the molecular weight is 30,000 or more, the copolymer may provide a good steric repulsion effect as a dispersant, and is readily adsorbed on the pigment (P) owing to the steric effect.

The number average molecular weight (Mn) of the copolymer is preferably about 1,000 to about 100,000, and particularly preferably about 3,000 to about 50,000. When the number average molecular weight is within the range, the copolymer may serve as a coating on the pigment or a coating of the ink composition. The copolymer employed in the invention is preferably used in the form of an alkali metal salt or an organic amine salt.

The molecular weight distribution of the copolymer employed in the invention (weight average molecular weight/number average molecular weight) is preferably from 1 to 6, and more preferably from 1 to 4. When the molecular weight distribution is within the above-described range, the resulting ink may have improved dispersion stability and ejection stability.

The number average molecular weight and the weight average molecular weight are measured by the differential refractometer detection with THF as a solvent in a GPC analyzer using columns TSKgel GMHxL, TSKgel G4000 HxL and TSKgel G2000 HxL (manufactured by Tosoh Corporation), and is obtained by conversion with a polystyrene reference material.

The copolymer employed in the invention may be synthesized by any polymerization method such as solution polymerization, precipitation polymerization, suspension polymerization, bulk polymerization, or emulsion polymerization. The polymerization reaction may be carried out under a known system, such as a batch, semi-continuous, or continuous system. Initiation of the polymerization may be carried out with a radical initiator, or photo-irradiation or radiation-irradiation. These methods of polymerization and initiation of polymerization are described in, for example, "Kobunshi Gosei Hoho" by Teiji Tsuruta, Revised Edition (published by Nikkan Kogyo Shimbun, Ltd., 1971) and "Kobunshi Gosei no Jikkenho" by Takayuki Ohtu and Masaetu Kinoshita (published by Kagaku-Dojin Publishing Company Inc., 1972) pp. 124 to 154.

Among these polymerization methods, a solution polymerization method using a radical initiator is preferable. Examples of the solvent used in the solution polymerization method include various organic solvents such as ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, methylene chloride, chloroform, dichloroethane, methanol, ethanol, 1-propanol, 2-propanol, and 1-butanol. These solvents may be used alone or in a combination of two or more of them, or may be mixed with water as a mixed solution. The polymerization temperature should be chosen in consideration of the molecular weight of the intended polymer and the type of the initiator, and is usually from 0°C to 100°C, and is preferably from 50°C to 100°C. The reaction pressure may be appropriately selected, and is usually from 1 kg/cm² to 100 kg/cm², and particularly preferably from about 1 kg/cm² to about 30 kg/cm². The reaction period may be about 5 hours to about 30 hours. The resulting resin may be subjected to purification treatment such as reprecipitation.

Specific examples of preferable copolymers of the invention are shown below with mass percent of structural units, weight-average molecular weight and acid value. The invention is not limited to these examples.
- Copolymer of (mixture of M-25 and M-27) / ethyl methacrylate / methacrylic acid (15/75/10% by mass, Mw: 49400, acid value: 65.2)
- Copolymer of M-25 / ethyl methacrylate / methacrylic acid (18/69/13% by mass, Mw: 41600, acid value: 84.7)
- Copolymer of (mixture of M-28 / M-29) / ethyl methacrylate / methacrylic acid (15/75/10% by mass, Mw: 38600, acid value: 65.2)
- Copolymer of M-28 / ethyl methacrylate / methacrylic acid (20/73/7% by mass, Mw: 45300, acid value: 45.6)

### <Pigment>

The pigment (P) to be coated with the copolymer employed in the invention is described below.

The pigment (P) is not particularly limited, and may be appropriately selected according to the intended use. The pigment (P) may be, for example, an organic or inorganic pigment.

Examples of the organic pigment include azo pigments, polycyclic pigments, dye chelates, nitro pigments, nitroso pigments, and aniline black. Among them, azo pigments and polycyclic pigments are more preferable.

Examples of the azo pigments include azo lakes, insoluble azo pigments, condensed azo pigments, and chelate azo pigments.

Examples of the polycyclic pigment include phthalocyanine pigments, perylene pigments, perinone pigments, anthraquinone pigments, quinacridone pigments, dioxazine pigments, indigo pigments, thio indigo pigments, isoindolinone pigments, and quinophthalone pigments.

Examples of the dye chelates include basic dye chelates and acidic dye chelates.

Examples of the inorganic pigments include titanium oxide, iron oxide, calcium carbonate, barium sulfate, aluminum hydroxide, barium yellow, cadmium red, chrome yellow, and carbon black. Among these pigments, carbon black is particularly preferable. The carbon black may be, for example, a carbon black manufactured by a known method such as a contact method, a furnace method or a thermal method.

The pigment may be used singly or in a combination of two or more of them, each of which may be selected from the above classes of pigments and may belong to the same class as each other or different classes from each other.

A particle diameter (volume-average particle diameter) in a dispersion of the resin-coated pigment particle in the invention is preferably in the range of from 50 nm to 120 nm, more preferably in the range of from 60 nm to 100 nm, and still more preferably in the range of from 70 nm to 90 nm.

When the particle diameter is 50 nm or more, deterioration of stability may tend to be inhibited. When the particle diameter is 120 nm or less, droplet hitting characteristics may become excellent and generation of white spots in a recorded image preferably may tend to be inhibited.

The particle size distribution of the resin-coated pigment particle is not particularly limited. The particle size distribution may be either a broad particle size distribution or a monodispersed particle size distribution. In embodiments, two kinds of dispersion having a monodispersed particle size distribution may be used in combination.

A volume average particle diameter measured by a dynamic light-scattering method using a particle size distribution analyzer NANOTRACK UPA-EX150 (trade name, manufactured by Nikkiso Co., Ltd.) is adopted as the particle diameter of the resin-coated pigment particle.

The resin-coated pigment in the invention may be produced using the copolymer, the pigment and the like by a known physical or chemical method such as that described in JP-A Nos. 9-151342, 10-140065, 11-209672, 11-172180, 10-25440, and 11-43636. Specific examples of the method include the phase inversion method and acid precipitation method described in JP-A Nos. 9-151342 and 10-140065. Of these methods, the phase inversion method is preferable from the viewpoint of dispersion stability.

The phase inversion method is a self-dispersing method (a phase inversion emulsification method), which may basically include dispersing a mixture of a pigment and a water-soluble or self-dispersing resin in water, in which the "mixture" refers to a state in which the components in an undissolved state are mixed, or a state in which the components are dissolved and mixed, or a state including both of the above states, and may contain a curing agent or a polymer. Specific examples of the phase inversion method include that described in JP-A No. 10-140065.

The resin-coated pigment employed in the invention may be prepared using a copolymer having the repeating unit (a) represented by Formula (1) and the repeating unit (b) having an ionic group through the preparation method of preparing a dispersion of the resin-coated pigment including the following processes (1) and (2). The ink composition of the invention may be prepared by this preparation method followed by employing the obtained dispersion of the resin-coated pigment, water, and an organic solvent to prepare the ink composition.
Process (1): dispersing a mixture containing a copolymer having the repeating unit (a) represented by Formula (1) and the repeating unit (b) having an ionic group, an organic solvent, and water through stirring or the like to obtain a dispersion; and
Process (2): removing the organic solvent from the dispersion.

There is no limitation on a stirring method of the mixture, and generally-used mixing and stirring devices or, as required, dispersers such as an ultrasonic disperser, a high voltage homogenizer, or a bead mill can be used.

Preferable examples of the organic solvent include an alcohol solvent, a ketone solvent, and an ether solvent.

Examples of the alcohol solvent include isopropyl alcohol, n-butanol, t-butanol, and ethanol. Examples of the ketone solvent include acetone, methyl ethyl ketone, diethyl ketone, and methyl isobutyl ketone. Examples of the ether solvent include dibutyl ether and dioxane. Among the solvents, a ketone solvent, such as methyl ethyl ketone, and an alcohol solvent, such as isopropyl alcohol, are preferable, and methyl ethyl ketone is more preferable.

In the process (1), a neutralizer may be used if necessary. The neutralizer is used for forming an emulsion state or a dispersion state in which the dissociative group is partially or thoroughly neutralized and the copolymer is stabilized in water. Details of the neutralizer are described below.

In the process (2), a dispersion of the resin-coated pigment particles can be obtained by inverting a phase of the dispersion, which has been obtained in the process (1), to a water phase by common procedures such as vacuum distillation distilling off the organic solvent therefrom. The thus-obtained dispersion is substantially free of the organic solvent. The amount of the organic solvent contained in the dispersion is preferably 0.2% by mass or less, and more preferably 0.1% by mass or less.

More specifically, the method of forming the resin-coated pigment includes, for example: (1) mixing an anionic group-containing copolymer or its solution in an organic solvent with a basic compound (neutralizer) thereby carrying out neutralization; (2) mixing the obtained mixed solution with a pigment to make a suspension, and then dispersing the pigment using a disperser or the like to obtain a pigment dispersion; and (3) removing the organic solvent by, for example, distillation thereby coating the pigment with the anionic group-containing copolymer, and dispersing the coated pigment particles in an aqueous medium to make an aqueous dispersion.

This method is further detailed in JP-A Nos. 11-209672 and 11-172180.

In the invention, the dispersing treatment may be carried out using, for example, a ball mill, a roll mill, a bead mill, a high-pressure homogenizer, a high-speed stirring disperser, or an ultrasonic homogenizer.

The content of the pigment coated with the copolymer employed in the invention is preferably from 1% by mass to 10% by mass, more preferably from 2% by mass to 8% by mass, and particularly preferably from 2% by mass to 6% by mass, from the viewpoints of the dispersion stability and concentration of the ink composition.

### (Water-soluble Organic solvent)

The ink composition of the invention contains at least one water-soluble organic solvent. The water-soluble organic solvent is used as an anti-drying agent, a humectant, or a penetration enhancing agent. The anti-drying agent is used for preventing clogging of inkjet nozzles caused by adhesion, drying, and aggregation of ink at the ink ejection ports. The anti-drying agent or humectant is preferably a water-soluble organic solvent having a lower vapor pressure than that of water. The penetration enhancing agent is used to improve ink permeability through paper.

In the invention, a water-soluble organic solvent refers to an organic solvent which dissolves at an amount of more than 5g in 100g of water under the condition of ordinary temperature and atmospheric pressure.

The water-soluble organic solvent used in the ink composition in the invention may be appropriately selected from known organic solvents considering the function as an anti-drying agent, a humectant, or a penetration enhancing agent, from the viewpoint of compatibility with water.

Examples of water-soluble organic solvents include alkanediols (polyhydric alcohols) such as glycerin, 1,2,6-hexanetriol, trimethylolpropane, ethylene glycol, propylene glycol, diethylene glycol, triethylene glycol, tetraethylene glycol, pentaethylene glycol, dipropylene glycol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; alkyl alcohols having 1 to 4 carbon atoms, such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-prapyl ether, diethylene glycol mono-iso-propyl ether, ethylene glycol mono-n-butyl ether, ethylene glycol mono-t-butyl ether, diethylene glycol mono-t-butyl ether, diethylene glycol mono-n-butyl ether, triethylene glycol mono-n-butyl ether, 1-methyl-1-methoxy butanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monomethyl ether, dipropylene glycol mono-n-propyl ether, dipropylene glycol mono-iso-propyl ether, and tripropylene glycol monomethyl ether; 2-pyrrolidone, N-methyl-2-pyrrolidone, 1,3-dimethyl-2-imidazolidinone, formamide, acetamide, dimethyl sulfoxide, sorbit, sorbitan, acetin, diacetin, triacetin, and sulfolane. These organic solvents may be used alone or in a combination of two or more of them.

As an anti-drying agent or a humectant, polyhydric alcohols are useful. Examples of the polyhydric alcohols include glycerin, ethylene glycol, diethylene glycol, triethylene glycol, propylene glycol, dipropylene glycol, tripropylene glycol, 1,3-butanediol, 2,3-butanediol, 1,4-butanediol, 3-methyl-1,3-butanediol, 1,5-pentanediol, tetraethylene glycol, 1,6-hexanediol, 2-methyl-2,4-pentanediol, polyethylene glycol, 1,2,4-butanetriol, 1,2,6-hexanetriol and thiodiglycol. These polyhydric alcohols may be used alone or in a combination of two or more of them.

It is preferable to use a so-called solid humectant in combination. Examples of the so-called solid humectant include saccharides such as glucose, mannose, fructose, ribose, xylose, arabinose, galactose, aldonic acid, glucitol, maltose, cellobiose, lactose, sucrose, trehalose, and maltotriose; glycitols; hyaluronic acids; and ureas.

As a penetration enhancing agent, polyol compounds are preferable. Examples of aliphatic diols include 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, 5-hexene-1,2-diol, and 2-ethyl-1,3-hexanediol. Among them, 2-ethyl-1,3-hexanediol and 2,2,4-trimethyl-1,3-pentanedial are preferable.

The water-soluble organic solvents may be used alone or in a combination of two or more of them.

The content of the water-soluble organic solvent in the ink composition is preferably from 1% by mass to 60% by mass, more preferably from 5% by mass to 40% by mass and particularly preferably from 10% by mass to 30% by mass with respect to total mass of the ink composition, from the viewpoints of stability and keeping reliability of ink ejection.

### (Water)

The ink composition employed in the invention contains water.

While the amount of water contained in the ink composition is not particularly limited, the content of water is preferably from 10% by mass to 99% by mass, more preferably from 30% by mass to 80% by mass, and even more preferably from 50% by mass to 70% by mass.

### -Neutralizer-

The ink composition of the invention may contain at least one neutralizer. The neutralizer is used for neutralizing acid groups contained in the copolymer during preparation of the pigment particles coated with the copolymer. The amount of the neutralizer is preferably from 0.5 equivalents to 1.5 equivalents, and more preferably from 1 equivalent to 1.5 equivalents with respect to the acid value of the copolymer.

Examples of the neutralizer include alcohol amines (for example, diethanolamine, triethanolamine, and 2-amino-2-ethyl-1,3-propanediol), alkali metal hydroxides (for example, lithium hydroxide, sodium hydroxide, and potassium hydroxide), ammonium hydroxides (for example, ammonium hydroxide and quaternary ammonium hydroxide), phosphonium hydroxides, and alkali metal carbonates. Among them, sodium hydroxide and potassium hydroxide are preferably used.

### -Surfactant-

The ink composition of the invention preferably contains at least one surfactant. The surfactant is used as a surface tension regulator. Examples of the surfactant include nonionic, cationic, anionic, and betaine surfactants.

In order to achieve good ink ejection in inkjet methods, the surfactant is preferably used in an amount such that the ink composition has a surface tension of from 20 mN/m to 60 mN/m. Further, the surfactant is preferably used in an amount such that the surface tension is from 20 mN/m to 45 mN/m, and more preferably used in an amount such that the surface tension is from 25 mN/m to 40 mN/m.

Examples of effective surfactants may include compounds containing a hydrophilic moiety and a hydrophobic moiety in one molecule thereof. The surfactant may also be an anionic, cationic, amphoteric, or nonionic surfactant.

Specific examples of the anionic surfactants include sodium dodecylbenzene sulfonate, sodium lauryl sulfate, sodium alkyl diphenyl ether disulfonate, sodium alkyl naphthalene sulfonate, sodium dialkyl sulfosuccinate, sodium stearate, potassium oleate, sodium dioctyl sulfosuccinate, sodium polyoxyethylene alkyl ether sulfate, sodium polyoxyethylene alkyl phenyl ether sulfate, sodium dialkyl sulfosuccinate, sodium stearate, sodium oleate, and sodium t-octylphenoxy ethoxypolyethoxyethyl sulfate. These anionic surfactants may be used alone or in a combination of two or more of them.

Specific examples of the nonionic surfactants include polyoxyethylene laurel ether, polyoxyethylene octylphenyl ether, polyoxyethylene oleylphenyl ether, polyoxyethylene nonylphenyl ether, oxyethylene-oxypropylene block copolymer, t-octylphenoxyethylpolyethoxyethanol, and nonylphenoxyethyl polyethoxyethanol. These nonionic surfactants may be used alone or in a combination of two or more of them.

Examples of the cationic surfactants include tetraalkyl ammonium salts, alkylamine salts, benzalkonium salts, alkylpyridium salts, and imidazolium salts, and specific examples thereof include dihydroxyethylstearylamine, 2-heptadecenyl-hydroxyethylimidazoline, lauryldimethylbenzylammonium chloride, cetylpyridinium chloride, and stearamidomethylpyridinium chloride.

The content of the surfactant in the ink composition is not particularly limited, and is preferably 1% by mass or more, more preferably 1% by mass to 10% by mass, and even more preferably 1% by mass to 3% by mass.

### -Other components-

In addition to the above-described components, the ink composition of the invention may further contain other components such as resin particles or a polymer latex from the viewpoint of improvement in scratch resistance. Examples of the other components which can be included if necessary further include an ultraviolet absorber, an anti-fading agent, a fungicide, a rust preventive agent, an antioxidant, an emulsification stabilizer, a preservative, an anti-foaming agent, a viscosity regulator, a dispersion stabilizer, and a chelating agent.

Examples of the resin particles include particles of acrylic resins, vinyl acetate resins, styrene-butadiene resins, vinyl chloride resins, acryl-styrene resins, butadiene resins, styrenic resins, crosslinked acrylic resins, crosslinked styrenic resins, benzoguanamine resins, phenolic resins, silicone resins, epoxy resins, urethane resins, paraffin resins, or fluorocarbon resins. These resins may be used in the form of polymer latexes containing these resins.

Among the above resins, acrylic resins, acryl-styrene resins, styrenic resins, crosslinked acrylic resins, and crosslinked styrenic resins are preferable.

The weight average molecular weight of the resin is preferably from 10,000 to 200,000, and more preferably from 100,000 to 200,000.

The average particle diameter of the resin particles is preferably from 10 nm to 1 µm, more preferably from 10 nm to 200 nm, even more preferably from 20 nm to 100 nm, and particularly preferably from 20 nm to 50 nm.

The addition amount of the resin particles is preferably from 0.5% by mass to 20% by mass, more preferably from 3% by mass to 20% by mass, and even more preferably from 5% by mass to 15% by mass with respect to the total amount of the ink.

The glass transition temperature (Tg) of the resin particles is preferably 30°C or higher, more preferably 40°C or higher, and even more preferably 50°C or higher.

The resin particles are not particularly limited as to their particle diameter distribution, and may have a broad particle diameter distribution or a monodispersed particle diameter distribution, In embodiments, a mixture of two or more kinds of resin particles each having a monodispersed particle diameter distribution may be used.

### -Physical properties of Ink composition-

The surface tension (at 25°C) of the ink composition of the invention is preferably from 20 mN/m to 60 mN/m, more preferably from 20 mN/m to 45 mN/m, and even more preferably from 25 mN/m to 40 mN/m.

The surface tension may be measured with an ink at 25°C using Automatic Surface Tensiometer CBVP-Z (trade name, manufactured by Kyowa Interface Science Co., Ltd.).

The ink composition of the invention preferably has a viscosity (at 20°C) of from 1.2 mPa·s to 15.0 mPa·s, more preferably 2 mPa·s or more but less than 13 mPa·s, and even more preferably 2.5 mPa·s or more but less than 10 mPa·s.

The viscosity may be measured with an ink at 20°C using VISCOMETER TV-22 (trade name, manufactured by Toki Sangyo Co., Ltd.).

The ink composition of the invention may be used for the formation of a multi-color image (for example, a full color image). For the formation of a full color image, a magenta color ink composition, a cyan color ink composition, and a yellow color ink composition may be used, and additionally a black color ink composition may also be used to adjust the color tone.

In addition to the yellow (Y), magenta (M), and cyan (C) color ink compositions, other ink compositions such as a red (R) ink composition, a green (G) ink composition, a blue (B) ink composition, or a white (W) ink composition, or those having a so-called special color used in the printing field may be used.

The ink compositions having an intended color are prepared by changing as desired the color pigment used as the coloring agent.

The ink composition of the invention may be employed in an ink set for inkjet recording in combination with an aqueous liquid composition described below.

### (Aqueous liquid composition)

The aqueous liquid composition in the inkjet recording ink set of the invention contains at least one aggregation component for aggregating the pigment in the ink composition when the aqueous liquid composition is mixed with the ink composition, and may further contain other components, if necessary.

### -Aggregation component-

The aqueous liquid composition contains at least one aggregation component for aggregating the pigment in the ink composition. The aqueous liquid composition is mixed with the ink composition ejected by an inkjet method, thereby promoting the aggregation of the pigment stably dispersed in the ink composition.

Examples of the aqueous liquid composition include a liquid composition which changes the pH of the ink composition, thereby forming an aggregate. In this case, the pH of the aqueous liquid composition (at 25°C) is preferably 6 or less, and more preferably 4 or less. In particular, the pH (at 25°C) is preferably from 1 to 4, and particularly preferably from 1 to 3. In this case, the pH of the ink composition (at 25°C) is preferably 7.5 or more, and more preferably 8 or more.

In the invention, from the viewpoints of image density, definition (resolution), and speedup of inkjet recording, it is particularly preferable that the pH of the ink composition (at 25°C) be 7.5 or more, and the pH of the aqueous liquid composition (at 25°C) be 4 or less.

Examples of the aggregation component for aggregating the pigment include multivalent metal salts, organic acids, polyallylamines, and derivatives thereof.

Examples of the multivalent metal salts may include salts of alkaline earth metals belonging to group 2 in the periodic table (for example, magnesium and calcium), transition metals belonging to group 3 in the periodic table (for example, lanthanum), cations of elements belonging to group 13 in the periodic table (for example, aluminum), and lanthanides (for example, neodymium). Among these metal salts, carboxylates (for example, formates, acetates, and benzoates), nitrates, chlorides, and thiocyanates are preferable. Among them, calcium salts or magnesium salts of carboxylates (for example, formates, acetates, and benzoates), calcium salts or magnesium salts of nitrates, calcium chloride, magnesium chloride, and calcium salts or magnesium salts of thiocyanates are particularly preferable.

The organic acid may be appropriately selected from polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidone carboxylic acid, pyrone carboxylic acid, pyrrolecarboxylic acid, furancarboxylic acid, pyridinecarboxylic acid, coumaric acid, thiophenecarboxylic acid, nicotinic acid, derivatives of these compounds, and salts of these compounds.

The aggregation components may be used alone or in a combination of two or more of them.

The content of the aggregation component for aggregating the pigment is preferably from 1% by mass to 20% by mass, more preferably from 5% by mass to 20% by mass, and even more preferably from 10% by mass to 20% by mass, with respect to the total amount of the aqueous liquid composition.

### <Image recording method>

Image recording can be performed by using the ink composition of the invention.

The method for the image recording includes: applying the ink composition of the invention, which contains a copolymer (copolymer including the repeating unit (a) represented by Formula (1) and the repeating unit (b) having an ionic group), a pigment, a water-soluble organic solvent, and water, onto a recording medium by an inkjet method; and applying an aqueous liquid composition, which contains a component for aggregating the pigment in the ink composition, onto the recording medium, so that the ink composition is brought into contact with the aqueous liquid composition so as to form an image.

In the image recording method of the invention, the ink composition containing the pigment coated with the copolymer is used as a colorant when an image is recorded through the aggregation caused by the contact between the ink composition and aqueous liquid composition at the time of recording. Therefore, the adhesion or deposition of aggregate on the liquid ejection portion formed by the contact between the two liquids may be reduced, and the removal of the aggregate attached thereto may be facilitated. As a result, ink jetting directional defects may be suppressed, and the occurrence of image defects such as white spots may be suppressed, whereby high-definition image may be recorded. The decrease of the maintenance frequency of the jetting apparatus and improvement in maintenance properties of the apparatus may also be achieved.

In the applying of the ink, the ink composition is applied by an inkjet method. More specifically, the applying of the ink include imparting energy to the ink composition to eject the ink to form an image on a desired recording medium such as plain paper, resin coated paper, inkjet paper such as those described in JP-A Nos. 8-169172, 8-27693, 2-276670, 7-276789, 9-323475, 62-238783, 10-153989, 10-217473, 10-235995, 10-217597 or 10-337947, a film, electrophotographic common paper, fabrics, glass, metal or ceramics. In embodiments, the inkjet recording method described in the paragraphs 0093 to 0105 of JP-A No. 2003-306623 can be employed as a preferable inkjet recording method.

There is no particular limitation on the inkjet method in the invention. Any known method, such as an electric charge control method in which an ink is jetted utilizing electrostatic attraction force, a drop-on-demand method (pressure pulse method) utilizing vibration pressure of a piezo-electric element, an acoustic inkjet method including converting an electric signal into an acoustic beam, irradiating the acoustic beam to an ink, and jetting the ink utilizing radiation pressure, or a thermal inkjet (BUBBLE JET^{®}) method including heating an ink to form bubbles and utilizing pressure generated therefrom, may be employed. Specifically, in embodiments, an inkjet method including jetting an ink from a nozzle by working force caused by a state change, which is a drastic change in volume of the ink occurring when thermal energy action is applied thereto, as described in JP-A No. 54-59936, can be effectively used.

The scope of the inkjet method includes: a method including jetting a large number of small volume-droplets of ink with low concentration, referred to as a photo ink; a method including using a plurality of inks that have substantially same hue and different concentration in view of improving image quality; a method including using a colorless transparent ink; and the like.

An inkjet head used in the inkjet method may be an on-demand system or a continuous system. Specific examples of the ejection system employed in the inkjet method include an electric-mechanical conversion system (such as a single cavity type, a double cavity type, a vender type, a piston type, a share mode type, or a shared wall type), an electric-thermal conversion system (such as a thermal inkjet type or a BUBBLE JET^{®} type), an electrostatic suction system (such as an electric field control type or a slit jet type), and an electric discharge system (such as a spark jet type), and any of these ejection systems may be used.

An ink nozzle or the like to be used when recording is performed by the inkjet method is not particularly limited, and can be suitably selected according to the purpose.

In the step of applying the aggregation component, the aqueous liquid composition is applied onto the recording medium before or after the application of the ink composition. The application of the aqueous liquid composition may be performed by a known method such as a coating method, an inkjet method, or a dipping method. The application method may use a known means such as a bar coater, an extrusion die coater, an air doctor coater, a blade coater, a rod coater, a knife coater, a squeeze coater, a reverse roll coater, or a bar coater. The details about the inkjet method are the same as described above.

In the image recording method, the application of the aggregation component, in which the aqueous liquid composition is applied, may be followed by the application of the ink. More specifically, in preferable embodiments, the aqueous liquid composition for aggregating the pigment in the ink composition may be applied onto the recording medium before the application of the ink composition, and then, the ink composition may be applied so as to bring the ink composition into contact with the aqueous liquid composition applied on the recording medium, thereby forming an image. In such embodiments, inkjet recording may be performed at a higher speed, and an image having a high density and high-definition may be produced even when high-speed recording is performed.

In the formation of an image, a polymer latex compound may also be used to impart glossiness and water resistance to the image, and to improve weather resistance of the image. The latex compound may be applied before, after, or at the same time of the application of the ink composition. The latex compound may be applied onto a recording medium, may be contained in the ink composition, or may be prepared in an independent liquid for application.

Specific examples thereof include those described in JP-A Nos. 2002-166638, 2002-121440, 2002-154201, 2002-144696, and 2002-080759.

In addition to the step of applying an ink composition and the step of applying an aqueous liquid composition to apply aggregation component, the image formation method may further include other processes. The other processes are not particularly limited, and may be appropriately selected according to the purposes. Examples of the other processes include: drying and removing of the organic solvent in the ink composition applied on the recording medium; and a thermal fixing in which the resin particles or polymer latex contained in the ink composition are fused to be fixed.

In embodiments, the inkjet recording method employed the invention may employ an intermediate transfer body as a recording medium on which an image is to be recorded first. Namely, in embodiments, the inkjet recording method employed the invention include: applying, onto an intermediate transfer body, the ink composition of the invention containing the copolymer, the pigment, the organic solvent and water, by an inkjet method; applying, onto the intermediate transfer body, the aqueous liquid composition containing a component which makes the pigment in the ink composition aggregate, so as to bring the ink composition and the aqueous liquid composition into contact with each other to form an image on the intermediate transfer body; and transferring the thus-formed image on the intermediate transfer body to a recording medium desired as a final recorded media. This application is intended to refer entire disclosure of Japanese Patent Application No. 2009-029609 filed on February 12, 2009, and to claim merit of the priority of it.

### EXAMPLES

The invention is further described with reference to the following examples, but the invention is not limited thereto. Unless otherwise noted, "part" indicates part by mass.

The weight average molecular weight was measured by gel permeation chromatography (GPC). GPC was carried out using HLC-8020 GPC (trade name, manufactured by Tosoh Corporation), three columns (trade name: TSKgel, SUPER Multipore HZ-H, manufactured by Tosoh Corporation, 4.6 mm ID × 15 cm), and THF (tetrahydrofuran) as an eluate. The sample concentration was 0.45% by mass, the flow rate was 0.35 mL/min, the sample injection amount was 10 µL, the measurement temperature was 40°C, and an RI detector was used. A calibration curve was prepared using eight samples "standard sample TSK standard, polystyrene": "F-40", "F-20", "F-4", "F-1", "A-5000", "A-2500", "A-1000", and "n-propylbenzene" manufactured by Tosoh Corporation.

### (Synthesis Example 1)

### Synthesis of Mixture of Monomers M-25 and M-27

9.76 g of (10H)-acridone and 5.61 g of potassium t-butoxide were dissolved in 30 g of dimethyl sulfoxide, followed by heating to 45°C. 15.26 g of chloromethylstyrene (trade name: CMS-P, manufactured by AGC SEIMI CHEMICAL CO., LTD., a mixture of meta-body/para-body in a ratio of 50/50 (mol/mol)) was added dropwise thereto, followed by further heating at 50°C under stirring for 5 hr. The reaction solution was poured into 200 g of distilled water under stirring. The resulting precipitate was filtered and washed, whereby 11.9 g of a mixture of monomers M-25 and M-27 was obtained.

### (Synthesis Example 2) (For reference only)

### <Synthesis of Mixture of Monomers M-28 and M-29>

355.0 g of 1,8-naphthalimide was dissolved in 1500 mL of N-methylpyrrolidone. 0.57 g of nitrobenzene was added thereto at 25°C, and 301.4 g of DBU (diazabicycloundecene) was further added dropwise thereto. After stirring the resultant for 30 min, 412.1 g of chloromethylstyrene (trade name: CMS-P, manufactured by AGC SEIMI CHEMICAL CO., LTD., a mixture of meta-body/para-body in a ratio of 50/50 (mol/mol)) was further added dropwise, followed by further heating at 60°C under stirring for 4 hr. Then, 2.7 L of isopropanol and 0.9 L of distilled water were added to the reaction solution, followed by cooling to 5°C under stirring. The resulting precipitate was filtered and washed with 1.2 L of isopropanol, whereby 544.0 g of a mixture of monomers M-28 and M-29 was obtained.

### (Synthesis Example 3)

### <Synthesis of Resin dispersant P-1>

88 g of methyl ethyl ketone was placed in a 1000-ml three-necked flask equipped with a stirrer and a cooling tube, and was heated to 72°C in a nitrogen atmosphere. Into the flask, a solution prepared by dissolving 0.85 g of dimethyl-2,2'-azobisisobutyrate, 15 g of the mixture of monomers M-25 and M-27, 10 g of methacrylic acid, and 75 g of ethyl methacrylate in 50 g of methyl ethyl ketone was added dropwise over a period of 3 hours. After completion of the addition, the reaction was continued for further one hour, and then a solution prepared by dissolving 0.42 g of dimethyl-2,2'-azobisisobutyrate in 2 g of methyl ethyl ketone was added into the flask, and the solution was heated at 78°C for 4 hours. The reaction solution thus obtained was reprecipitated twice in excess amounts of hexane, and the precipitated resin was dried to obtain 96.5 g of a copolymer of (mixture of M-25 and M-27)/methyl methacrylate/methacrylic acid (copolymerization ratio [% by mass] = 15/75/10) (resin dispersant P-1).

The composition of the resin dispersant P-1 thus obtained was confirmed by ¹H-NMR. Its weight average molecular weight (Mw) was 49400 as determined by GPC. The acid value of the polymer was 65.2 mgKOH/g as determined by the method described in Japanese Industrial Standard (JIS K 0070:1992).

### (Synthesis Example 4)

### <Synthesis of Resin dispersants P-2 to P-6>

Resin dispersants P-2 to P-6 were synthesized in a manner substantially similar to that in the synthesis of the resin dispersant P-1, except that the monomer and the amount (mass ratio) of the 15 g of the mixture of monomers M-25 and M-27, the 10 g of methacrylic acid, and the 75 g of ethyl methacrylate were respectively changed as shown in Table 1.

### (Example 1)

### -Preparation of Dispersion of Resin-coated pigment particles (Dispersion 1)-

12 parts of Pigment Red 122 (a magenta pigment, trade name: CROMOPHTAL JET MAGENTA DMQ, manufactured by Ciba Specialty Chemicals), 4.2 parts of the resin dispersant P-1, 16 parts of methyl ethyl ketone, 4.3 parts of an aqueous solution of 1 N NaOH and 60.3 parts of ion-exchanged water were mixed, followed by mixing using a disper mill, further followed by dispersing with passing with a dispersing device (trade name: MICROFLUODIZER M -140K, manufactured by Microfluidics; 150MPa) for eight times. Subsequently, the resulting dispersion was distilled under reduced pressure at 55°C to remove methyl ethyl ketone, followed by further removing a part of water, so as to provide a dispersion 1 which contains 15% by mass of resin-coated pigment particles. This dispersion 1 was subjected to aging for 6 months at 30°C.

### -Measurement of Particle diameter of Resin-coated pigment particle-

The dispersion 1 of resin-coated pigment particles obtained was measured using a NANOTRAC particle size distribution analyzer UPA-EX150 (trade name, manufactured by Nikkiso Co., Ltd.) to determine the volume average particle diameter by a dynamic light scattering method. For the measurement, 10 mL of ion-exchanged water was added to 10 µL of the dispersion of resin-coated pigment particles to make a sample solution, and the temperature of the solution was adjusted to 25°C. The measurement results are shown in Table 1.

### -Preparation of Latex-

19.8 g of LATEMUL ASK (trade name, manufactured by Kao Corporation; carboxylate emulsifier), 6 g of an aqueous solution of sodium hydroxide (5 mol/L) and 0.3 g of 2,2'-azobis(2-amidinopropane) dihydrochloride were added to 120 g of water, followed by homogeneously dissolving.

The solution was then heated to 70°C, and a monomer mixture of 25.9 g of styrene, 26.3 g of butyl acrylate and 5.1 g of acrylic acid was added thereto over 2 hr. Thereafter, the resulting solution was heated at 70°C for 2 hr and at 80°C for 3 hr. After the solution was cooled to room temperature, an aqueous solution of 1 mol/L sodium hydroxide was added thereto under stirring so as to make the pH thereof be around 9, whereby latex PL-01 was obtained.

A volume average particle diameter of the obtained latex was 115 nm. A solid content of the latex dispersion liquid was 33% by weight.

### -Preparation of Ink composition-

An ink composition having the following composition was prepared using the dispersion I of the resin-coated pigment particles. The ink composition has a pH of 8.9 at 25°C.

### <Composition of ink composition>

(1) Dispersion 1 of resin-coated pigment particles (aged for 6 months at 30°C) 30 parts
(2) Latex PL-01 8 parts
(3) TPGmME 3 parts
(4) TEGmBE 8 parts
(5) DEGmBE 2 parts
(6) Glycerin 1 parts
(7) Thiodiglycol 2 parts
(8) 1,5-pentanediol 1 part
(9) OLFINE E1010 (trade name, manufactured by Nissin Chemical Industry Co., Ltd.) 1 part
(10) Ion-exchanged water: balance (to adjust the total amount of the composition to 100 parts)

### -Evaluation of Ink composition-

The ink composition obtained as described above was loaded into an inkjet apparatus having prototype print heads each having 600 dpi and 256 nozzles, and the generation of white spots was evaluated by the following method. A sheet of TOKUBISHI ART double-sided N (trade name, manufactured by Mitsubishi Paper Mills Ltd., basis weight: 84.9 g/m²) was herein used as a recording medium.

### -Evaluation 1 of White spot-

The obtained ink composition was stored at 30°C for 6 months. After the storage, the ink composition was jetted from the print heads onto a recording medium for 30 minutes. Subsequently, as a maintenance operation, the print heads were pressed with a pressure of 15 kPa for 10 seconds, and wiped with CLEAN WIPER FF-390c (trade name, manufactured by Kuraray Co., Ltd.). Thereafter, ink jetting was restarted and continued for 15 minutes, and an image (5 cm x 5 cm) recorded on a recording medium made at 5 minutes after the restart of the printing was observed. The observed image was evaluated based on the following visual observation criteria.

### -Evaluation 2 of White spot (Immediately after jetting for 60 minutes)-

The obtained ink composition was stored at 30°C for 6 months. After the storage, the ink composition was jetted from the print heads onto a recording medium for 60 minutes. Subsequently, an image (5 cm x 5 cm) recorded on a recording medium made immediately after the jetting for 60 minutes, was observed. The observed image was evaluated as an evaluation of an image irregularity in a recorded image, based on the following visual observation criteria.

### <Criteria>:

A: No white spot is observed.
B: Two or less white spots are observed.
C: Three to five white spots are observed.
D: Six to nine white spots are observed.
E: More than ten white spots are observed.

### -Resin-coated Pigment Particle Dispersions 2 to 13-

Dispersions 2 to 13 of resin-coated pigment particles were prepared in a manner substantially similar to the preparation of dispersion 1 of resin-coated pigment particles, except that the resin dispersant P-1 (the copolymer of mixture of monomers M-25 and M-27/methyl methacrylate/methacrylic acid) and a D/P ratio were changed respectively as shown in Table 1. The results of the measurement are shown in Table 1 and were evaluated with respect to particle diameter.

### (Examples 2 to 9 and Comparative examples 1 to 4)

Preparations and evaluations of ink compositions of Examples 2 to 6 and Comparative examples 1 to 4 were performed in a manner substantially similar to that in Example 1, except that, in the preparation the dispersion 1 of the resin-coated pigment particle in Example 1 was respectively changed to one shown in Table 2. The results of the evaluations are shown in Table 2.

**Table 1**

| Dispersion of Resin-coated Pigment Particles | Resin Dispersant | | | | D/P ratio (%) | Average Particle Diameter of Dispersed Particles (nm) |
|---|---|---|---|---|---|---|
| | | Species (% by mass) | Weight Average Molecular Weight | Acid Value (mgKOH/g) | | |
| Dispersion 1 | P-1 | Copolymer of {(M-25/M-27) Mixture/ Ethyl Methacrylate/Methacrylic Acid} (15/75/10) | 49400 | 65.2 | 35 | 82 |
| Dispersion 2 | P-1 | Copolymers of {(M-25/M-27) Mixture/Ethyl Methacrylate/Methacrylic Acid} (15/75/10) | 49400 | 65.2 | 40 | 83 |
| Dispersions 3 | P-1 | Copolymer of {(M-25/M-27) Mixture/ Ethyl Methacrylate/Methacrylic Acid} (15/75/10) | 49400 | 65.2 | 25 | 78 |
| Dispersion 4 | P-2 | Copolymer of {(M-25/M-27) Mixture/ Ethyl Methacrylate/Methacrylic Acid} (15/70/15) | 45300 | 97.8 | 40 | 80 |
| Dispersion 5 | P-3 | Copolymer of {(M-25/M-27) Mixture/ Ethyl Methacrylate/Methacrylic Acid} (15/78/7) | 48200 | 45.6 | 25 | 78 |
| Dispersion 6 | P-4 | Copolymer of {(M-28/M-29) Mixture/ Ethyl Methacrylate/Methacrylic Acid} (15/75/10) | 38600 | 65.2 | 30 | 87 |
| Dispersion 7 | P-1 | Copolymer of {(M-25/M-27) Mixture/ Ethyl Methacrylate/Methacrylic Acid} (15/75/10) | 49400 | 65.2 | 45 | 85 |
| Dispersion 8 | P-1 | Copolymer of {(M-25/M-27) Mixture/ Ethyl Methacrylate/Methacrylic Acid} (15/75/10) | 49400 | 65.2 | 15 | 75 |
| Dispersion 9 | P-5 | Copolymer of (Benzyl Methacrylate/ Methacrylic Acid) (90/10) | 46300 | 65.2 | 30 | 108 |
| Dispersion 10 | P-6 | Copolymer of (Styrene/Methacrylic Acid) (90/10) | 38500 | 65.2 | 30 | 125 |
| Dispersion 11 | P-1 | Copolymer of {(M-25/M-27) Mixture/ Ethyl Methacrylate/Methacrylic Acid} (15/75/10) | 49400 | 65.2 | 20 | 82 |
| Dispersion 12 | P-1 | Copolymer of {(M-25/M-27) Mixture/ Ethyl Methacrylate/Methacrylic Acid} (15/75/10) | 49400 | 65.2 | 10 | 73 |
| Dispersion 13 | P-1 | Copolymer of {(M-25/M-27) Mixture/ Ethyl Methacrylate/Methacrylic Acid} (15/75/10) | 49400 | 65.2 | 5 | 103 |

**Table 2**

| | Dispersion of Resin-coated Pigment Particles | White Spot Evaluation 1 | White Spot Evaluation 2 |
|---|---|---|---|
| Example 1 | Dispersion 1 | A | B |
| Example 2 | Dispersion 2 | A | C |
| Example 3 | Dispersion 3 | A | B |
| Example 4 | Dispersion 4 | A | C |
| Example 5 | Dispersion 5 | A | B |
| Example 6 (Reference) | Dispersion 6 | B | B |
| Example 7 | Dispersion 8 | C | B |
| Example 8 | Dispersion 11 | C | B |
| Example 9 | Dispersion 12 | C | C |
| Comparative Example 1 | Dispersion 7 | D | D |
| Comparative Example 2 | Dispersion 9 | E | B |
| Comparative Example 3 | Dispersion 10 | E | B |
| Comparative Example 4 | Dispersion 13 | E | D |

As shown in Table 2, Examples of the invention inhibit the jetting direction defects, and generation of white spot defects in a recorded image is suppressed.

The above Examples are exemplary embodiments in which a magenta color ink composition is prepared as the ink composition. By changing the species (color) of the pigment used in the magenta color ink composition, ink compositions having various colors such as a black ink composition, a cyan ink composition or a yellow ink composition may be obtained in a manner similar to the above.

Further, when inks of two or more colors are loaded into an inkjet recording apparatus, a multi-color image may be recorded, and results and advantages which are similar to those mentioned above may be obtained.

Thus, exemplary embodiments of the invention can provide an ink composition, using which a recorded image in which generation of white spots and an image irregularity in the recorded image is suppressed is obtainable, and image formation with high definition may be performed.

## Claims

1. An ink composition comprising:
a pigment (P);
a water-soluble organic solvent; and
water,
at least a part of a surface of the pigment being coated with a copolymer (D) comprising a repeating unit (a) represented by the following Formula (1) and a repeating unit (b) having an ionic group, and
the mass ratio (D:P) of the copolymer (D) to the pigment (P) lies in the range 10-40:100: 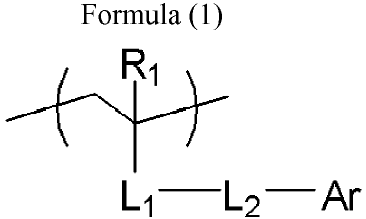
wherein R₁ represents a hydrogen atom or a methyl group; L₁ represents a substituted or unsubstituted phenylene group; L₂ represents a single bond or a divalent linkage group; and Ar represents a monovalent group derived from acridone or phthalimide.

2. An ink composition according to Claim 1, wherein the mass ratio (D:P) of the copolymer (D) to the pigment (P) lies in the range 25-40:100.

3. An ink composition according to Claim 1 or Claim 2, wherein the copolymer (D) comprises a hydrophilic structural unit (A) and a hydrophobic structural unit (B), the hydrophobic structural unit (B) comprises the repeating unit (a) represented by Formula (1), the hydrophilic structural unit (A) comprises the repeating unit (b) having an ionic group, the content of the hydrophilic structural unit (A) is 15% by mass or less of the total mass of the copolymer (D), and the repeating unit (b) having an ionic group comprises a structural unit derived from (meth)acrylic acid.

4. An ink composition according to any preceding claim, wherein the copolymer (D) has an acid value of 30 mgKOH/g to 100 mgKOH/g.

5. An ink composition according to any preceding claim, wherein the copolymer (D) has a weight average molecular weight of 30,000 or more.

## Patentansprüche

1. Tintenzusammensetzung, umfassend:
ein Pigment (P);
ein wasserlösliches organisches Lösungsmittel; und
Wasser,
worin zumindest ein Teil einer Oberfläche des Pigments mit einem Copolymer (D) beschichtet ist, umfassend eine durch die folgende Formel (1) dargestellte Wiederholungseinheit (a) und eine Wiederholungseinheit (b), die eine ionische Gruppe aufweist, und
worin das Masseverhältnis (D:P) des Copolymers (D) zu dem Pigment (P) im Bereich von 10-40:100 liegt: 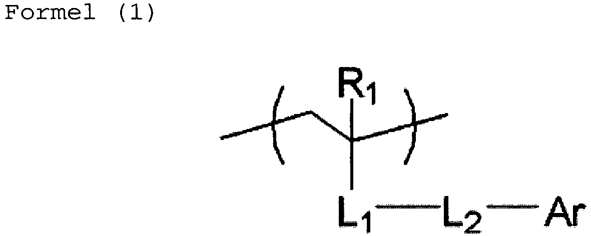
worin R₁ ein Wasserstoffatom oder ein Methylgruppe darstellt; L₁ eine substituierte oder unsubstituierte Phenylengruppe darstellt; L₂ eine Einfachbindung oder eine divalente Verknüpfungsgruppe darstellt; und Ar eine monovalente Gruppe darstellt, die aus Acridon oder Phthalimid abgeleitet ist.

2. Tintenzusammensetzung gemäß Anspruch 1, worin das Masseverhältnis (D:P) des Copolymers (D) zu dem Pigment (P) im Bereich von 25-40:100 liegt.

3. Tintenzusammensetzung gemäß Anspruch 1 oder Anspruch 2, worin das Copolymer (D) eine hydrophile Struktureinheit (A) und eine hydrophobe Struktureinheit (B) umfasst, worin die hydrophobe Struktureinheit (B) die durch die Formel (1) dargestellte Wiederholungseinheit (a) umfasst, die hydrophile Struktureinheit (A) die Wiederholungseinheit (b), die eine ionische Gruppe aufweist, umfasst, worin der Gehalt der hydrophilen Struktureinheit (A) 15 Masse-% oder weniger der Gesamtmasse des Copolymers (D) ausmacht und die Wiederholungseinheit (b), die eine ionische Gruppe aufweist, eine aus (Meth)acrylsäure abgeleitete Struktureinheit umfasst.

4. Tintenzusammensetzung gemäß irgendeinem vorhergehenden Anspruch, worin das Copolymer (D) einen Säurewert von 30 mgKOH/g bis 100 mgKOH/g aufweist.

5. Tintenzusammensetzung gemäß irgendeinem vorhergehenden Anspruch, worin das Copolymer (D) ein gewichtsgemitteltes Molekulargewicht von 30.000 oder größer aufweist.

## Revendications

1. Composition d'encre comprenant :
un pigment (P) ;
un solvant organique hydrosoluble ; et
de l'eau,
au moins une partie d'une surface du pigment étant revêtue d'un copolymère (D) comprenant une unité répétitive (a) représentée par la Formule (1) suivante et
une unité répétitive (b) ayant un groupe ionique, et
le rapport de masse (D : P) du copolymère (D) sur le pigment (P) se situe dans la plage 10-40 : 100 : 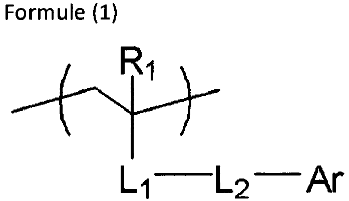
dans laquelle R₁ représente un atome d'hydrogène ou un groupe méthyle ; L₁ représente un groupe phénylène substitué ou non substitué; L₂ représente une liaison simple ou un groupe de liaison divalent ; et Ar représente un groupe monovalent dérivé d'acridone ou de phtalimide.

2. Composition d'encre selon la revendication 1, dans laquelle le rapport de masse (D : P) du copolymère (D) sur le pigment (P) se situe dans la plage 25-40 : 100.

3. Composition d'encre selon la revendication 1 ou 2, dans laquelle le copolymère (D) comprend une unité structurelle hydrophile (A) et une unité structurelle hydrophobe (B), l'unité structurelle hydrophobe (B) comprend l'unité répétitive (a) représentée par la Formule (1), l'unité structurelle hydrophile (A) comprend l'unité répétitive (b) ayant un groupe ionique, la teneur en unité structurelle hydrophile (A) est de 15 % en masse ou moins de la masse totale du copolymère (D), et l'unité répétitive (b) ayant un groupe ionique comprend une unité structurelle dérivée d'acide (méth)acrylique.

4. Composition d'encre selon l'une quelconque des revendications précédentes, dans laquelle le copolymère (D) a un indice d'acide de 30 mg de KOH/g à 100 mg de KOH/g.

5. Composition d'encre selon l'une quelconque des revendications précédentes, dans laquelle le copolymère (D) a un poids moléculaire moyen en poids de 30 000 ou plus.
